(19) Europäisches Patentamt / European Patent Office / Office européen des brevets

(11) **EP 2 827 484 B1**

(12) **EUROPEAN PATENT SPECIFICATION**

(45) Date of publication and mention
of the grant of the patent:
**16.10.2019 Bulletin 2019/42**

(21) Application number: **13761993.8**

(22) Date of filing: **24.01.2013**

(51) Int Cl.:
*H02M 3/158* (2006.01)    *H01F 30/00* (2006.01)
*H01F 3/14* (2006.01)

(86) International application number:
**PCT/JP2013/051475**

(87) International publication number:
**WO 2013/136854 (19.09.2013 Gazette 2013/38)**

(54) **DC-DC CONVERTER**

GLEICHSPANNUNGSWANDLER

CONVERTISSEUR CC-CC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.03.2012 JP 2012060547**

(43) Date of publication of application:
**21.01.2015 Bulletin 2015/04**

(73) Proprietors:
• **Sanken Electric Co., Ltd.
Niiza-shi, Saitama 352-8666 (JP)**
• **National University Corporation Nagoya
University
Aichi-ken 464-8601 (JP)**

(72) Inventors:
• **TERUI, Hiromitsu
Niiza-shi
Saitama 352-8666 (JP)**
• **ASUKE, Hideki
Niiza-shi
Saitama 352-8666 (JP)**
• **TAKANO, Hideharu
Niiza-shi
Saitama 352-8666 (JP)**
• **YAMAMOTO, Masayoshi
Matsue-shi
Shimane 690-8504 (JP)**
• **IMAOKA, Jun
Matsue-shi
Shimane 690-8504 (JP)**

(74) Representative: **Grünecker Patent- und
Rechtsanwälte
PartG mbB
Leopoldstraße 4
80802 München (DE)**

(56) References cited:
WO-A1-2009/157330    JP-A- H05 109 549
JP-A- 2005 223 125    JP-A- 2006 147 978
JP-A- 2006 262 601    JP-A- 2010 004 704
JP-A- 2011 234 549    JP-U- S5 881 921
US-A- 3 896 407    US-A1- 2008 224 809
US-B1- 6 657 529

## Description

TECHNICAL FIELD

The present invention relates to a DC-DC converter for carrying out a step-up operation, and particularly, to the shape of a core used for a transformer.

BACKGROUND ART

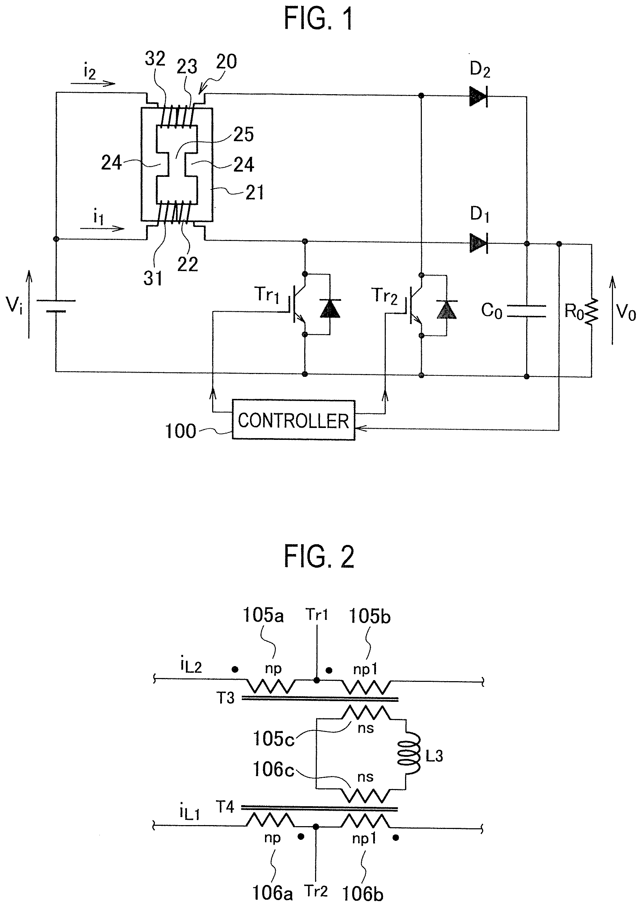

Figure 1 is a circuit diagram illustrating a DC-DC converter according to a related art. Figure 2 is an equivalent circuit diagram illustrating a coupling transformer 20 in the DC-DC converter of the related art illustrated in Fig. 1. The DC-DC converter illustrated in Fig. 1 has a DC power source Vi, the coupling transformer 20, switches Tr1 and Tr2, diodes D1 and D2, a smoothing capacitor Co, a load resistance Ro, and a controller 100.

The coupling transformer 20 has, as illustrated in Fig. 2, a transformer T3, a transformer T4, and a reactor L3. The transformer T3 has a primary winding 105a (having the number of turns of np), a coiled winding 105b (having the number of turns of np1) connected in series with the primary winding 105a, and a secondary winding 105c (having the number of turns of ns) electromagnetically coupled with the primary winding 105a and coiled winding 105b. The transformer T4 is configured same as the transformer T3 and has a primary winding 106a (having the number of turns of np), a coiled winding 106b (having the number of turns of np1) connected in series with the primary winding 106a, and a secondary winding 106c (having the number of turns of ns) electromagnetically coupled with the primary winding 106a and coiled winding 106b.

Both ends of the DC power source Vi are connected through the primary winding 105a of the transformer T3 to the collector and emitter of the switch Tr1 of an IGBT (Insulated Gate Bipolar Transistor). The both ends of the DC power source Vi are connected through the primary winding 106a of the transformer T4 to the collector and emitter of the switch Tr2 made of an IGBT. A connection point between the primary winding 105a of the transformer T3 and the collector of the switch Tr1, as well as the emitter of the switch Tr1 are connected to a series circuit that includes the coiled winding 105b of the transformer T3, the diode D1, and the smoothing capacitor Co. A connection point between the primary winding 106a of the transformer T4 and the collector of the switch Tr2, as well as the emitter of the switch Tr2 are connected to a series circuit that includes the coiled winding 106b of the transformer T4, the diode D2, and the smoothing capacitor Co.

Both ends of a series circuit that includes the secondary winding 105c of the transformer T3 and the secondary winding 106c of the transformer T4 are connected to the reactor L3. The controller 100 controls according to an output voltage Vo of the smoothing capacitor Co so that the switch Tr2 turns on after the switch Tr1 turns on and before the switch Tr1 turns off and so that the switch Tr1 turns on before the switch Tr2 turns off. Namely, it alternately turns on the switches Tr1 and Tr2 and makes the switches Tr1 and Tr2 simultaneously ON for a predetermined overlapping period on every half cycle.

According to the DC-DC converter of the related art having such a configuration, the controller 100 issues a control signal Tr1g to turn on the switch Tr1, and after the predetermined overlapping period, issues a control signal Tr2g to turn off the switch Tr2, so that a current passes through a path extending along Vi (plus (+) side), 105a, Tr1, and Vi (minus (-) side) to linearly increase the current of the switch Tr1. At the same time, the secondary winding 105c of the transformer T3 generates a voltage to pass a current L3i clockwise through a path extending along 105c, L3, 106c, and 105c.

The current L3i causes according to the law of equal ampere-turns of the transformer, to accumulate energy in the reactor L3 and the same current passes through the secondary winding 106c of the transformer T4. As a result, the primary winding 106a and coiled winding 106b of the transformer T4 induce voltages depending on the numbers of turns thereof.

When the transformer T4 has a turn ratio A as expressed by $A = (np + np1) / np$, a current of "$1 / A$" of the current to the switch Tr1 passes to the diode D2 through a route extending along Vi+, 106a, 106b, D2, Co, and Vi-. The current passes through the diode D2 until the switch Tr2 turns on. The output voltage Vo of the smoothing capacitor Co is the sum of a voltage generated by the primary winding 106a of the transformer T4 and a voltage generated by the coiled winding 106b of the transformer T4.

A voltage generated on the transformer T4 is expressed by a relationship of $A \times Vi \times D$, where D is an ON-duty of the switch Tr1 ($D = Ton / T$) and T is a switching period of the switch Tr1. The output voltage Vo of the smoothing capacitor Co is expressed by $Vo = Vi (1 + A \times D)$. Accordingly, managing the ON-duty D results in controlling the output voltage Vo.

Thereafter, the controller 100 issues a control signal Tr2g to turn on the switch Tr2, and after the predetermined overlapping period, issues a control signal Tr1g to turn off the switch Tr1. This results in causing a current passing through a path extending along Vi+, 106a, Tr2, and Vi-, to linearly increase a current to the switch Tr2. At the same time, the secondary winding 106c of the transformer T4 generates a voltage to increase and pass the current L3i clockwise through a path extending along 106c, 105c, L3, and 106c.

The current L3i causes according to the law of equal ampere-turns of the transformer, to accumulate energy in the reactor L3 and the same current passes through the secondary winding 105c of the transformer T3. As a result, the primary winding 105a and coiled winding 105b of the transformer T3 induce voltages depending on the numbers of turns thereof.

When the transformer T3 has a turn ratio A as defined by A = (np + np1) / np, a current having a value of the current of the switch Tr2 divided by A passes through a path extending along Vi+, 105a, 105b, D1, Co, and Vi-. The current to the diode D1 passes until the switch Tr1 turns on. The output voltage Vo of the smoothing capacitor Co is the sum of a voltage (an input voltage) of the DC power source Vi, a voltage generated by the primary winding 105a of the transformer T3, and a voltage generated by the coiled winding 105b of the transformer T3. A voltage generated on the transformer T3 is expressed by A x Vi x D, where D is an ON-duty of the switch Tr2 (D = Ton / T), and T is a switching period of the switch Tr2. The output voltage Vo of the smoothing capacitor Co is expressed by Vo = Vi (1 + A x D). Accordingly, managing the ON-duty D results in controlling the output voltage Vo.

The DC-DC converter of the related art illustrated in Fig. 1 is known as a multiphase transformer-linked step-up chopper circuit whose example is disclosed in Japanese Unexamined Patent Application Publication No. 2010-004704 (Patent Literature 1) (refer to Patent Literature 1) or WO 2009/157330 A1. The DC-DC converter connects two independent phases to each other through a transformer. This reduces the number of required cores from two to one to carry out a step-up operation.

The coupling transformer 20 has a core 21 that is a combination of two E-shaped core members faced in an extending planar direction. The core 21 has side legs 22 and 23, a center leg 24, and a gap 25. Around the side leg 22, a winding 31 is wound, and around the side leg 23, a winding 32 is wound. A current i1 passes through the winding 31 and a current i2 the winding 32.

US 6,657,529 B1 relates to a magnetic component having at least two windings electrically connected in series and a core on which the windings are arranged so that in the event of a current flow through the windings the generated magnetic stray fields outside the component at least partly compensate each other. The core having at least one inside limb portion and at least two outside limb portions and in that the windings are arranged on the inside limb portion and/or the outside limb portions.

US 2008/0224809 A1 relates to a magnetic part having a first iron core wound with a winding constituting a transformer and an inductance component of a parallel coil and a second iron core wound with an inductance component of a series coil, in which a ratio of the dimensions of the first iron core and the second iron core are in accordance with their respective winding densities.

JP 2005 223125 A provides a step-up transformer of which insulation of a secondary coil is assured while a low profile at mounting is possible with ease of assembly. Since the direction of a winding axis of a primary coil and a secondary coil wound on magnetic legs is parallel to a mounting plane, the step-up transformer becomes a low profile. The secondary coil is wound on the magnetic leg independent of the primary coil, so the length required for divided winding is assured. A main core can employ the core of simple form such as U-shape and I-shape, and the primary coil wound on the main core can employ a thin wire material, resulting in an easy assembly work. Further, since the lower part of an I-type core is a low potential side at the output on the secondary side, wiring is allowed also at the lower part of the I-type core, improving flexibility in wiring with a substrate.

US 3,896,407 A provides a magnetic core and coil device having a strip which interfits with the flanges of adjacent ends of primary and secondary coil bobbins so to retain it in position to receive terminals to which wires leading to and from the coils may be connected.

JP 2006 147978 A relates to a small transformer for high voltage whose temperature rise is suppressed for achieving the highest efficiency and whose height is reduced for flattening. An E-I-E core structure is provided where two E-shaped cores are connected with their end faces to both sides of an I-shaped core. Coil bodies, which each include respective primary coils and respective secondary coils are placed around the outer legs of the E-shaped cores. In order to increase the transformer output, the primary coils are connected in parallel, while the secondary coils are connected in series.

SUMMARY OF INVENTION

Problems to be Solved by Invention

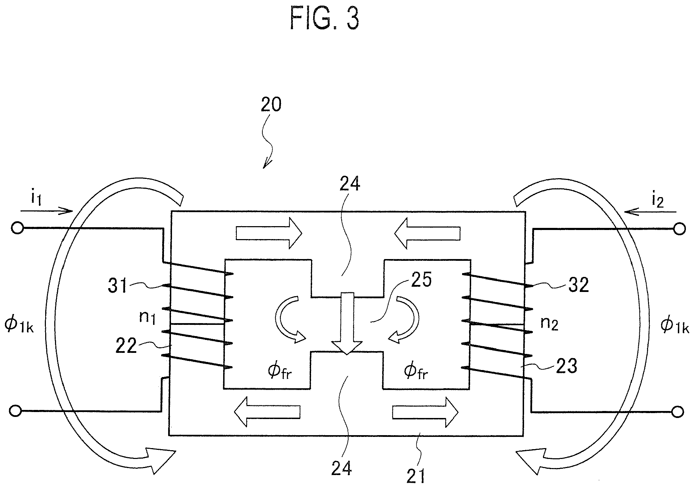

The coupling transformer 20, however, leaks a magnetic flux component φ1k (φ is a Greek letter "phi") outside the windings 31 and 32 as illustrated in Fig. 3 . Also, the gap 25 of the core 21 leaks a magnetic flux component φfr due to a fringing effect. Namely, the coupling transformer 20 of the related art causes large leakage flux to enlarge differences from theoretical values.

The present invention is able to provide a DC-DC converter having a coupling transformer that substantially realizes a design based on theoretical values.

Means to Solve Problems

The invention is defined by the independent claim 1. All the technical features of the independent claim are mandatory and not optional, irrespective of any statements to the contrary in the following passages.

In the following description the term "embodiment" may have been used for subject-matter that is not part of the invention as defined by the appended claim.

BRIEF DESCRIPTION OF DRAWINGS

Figure 1 is a circuit diagram illustrating a DC-DC converter according to a related art.
Figure 2 is an equivalent circuit diagram illustrating a coupling transformer in the DC-DC converter of the related art illustrated in Fig. 1.

Figure 3 is a view explaining the cause of a gap length increase in the DC-DC converter of the related art illustrated in Fig. 1.

Figure 4 is a circuit diagram illustrating a DC-DC converter according to Embodiment 1.

Figure 5 is a schematic view illustrating a coupling transformer with an EEI core in the DC-DC converter according to Embodiment 1.

Figure 6 is a comparative view illustrating a gap length of the related art and that of Embodiment 1.

Figure 7 is a comparative view illustrating a winding method of the coupling transformer of the related art and that of Embodiment 2.

MODE OF IMPLEMENTING INVENTION

DC-DC converters according to embodiments of the present invention will be explained in detail with reference to the drawings.

The DC-DC converters of the present invention are characterized in that each employs two E-shaped cores and an I-shaped core to realize a coupling transformer that reduces leakage flux and substantially realizes a design based on theoretical values.

(Embodiment 1)

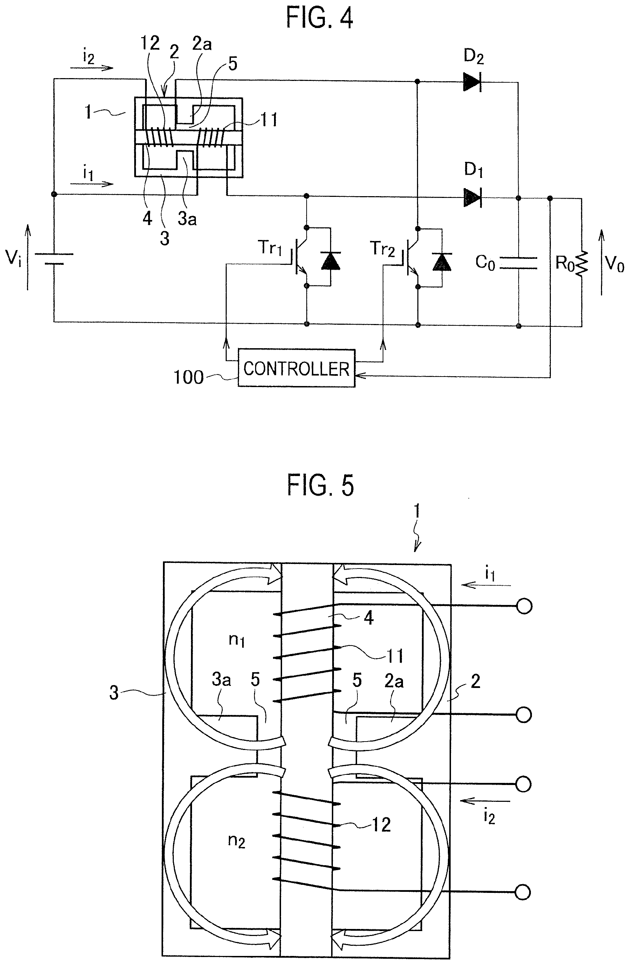

Figure 4 is a circuit diagram illustrating a DC-DC converter according to Embodiment 1. Figure 5 is a schematic view illustrating a coupling transformer that employs an EEI core and is incorporated in the DC-DC converter of Embodiment 1. The embodiment is characterized in that it employs, instead of the coupling transformer 20 of the related art illustrated in Figs. 1 to 3, the coupling transformer 1 illustrated in Fig. 5.

The remaining configuration of Fig. 4 is the same as that of Fig. 1, and therefore, like parts are represented with like reference marks to omit the detailed explanations thereof. Only the coupling transformer 1 will be explained here.

The coupling transformer 1 illustrated in Fig. 5 has an I-shaped core 4 and two E-shaped cores 2 and 3 that hold the I-shaped core 4 between them. The two E-shaped cores 2 and 3 are integrated into one so that center legs 2a and 3a thereof face each other in an extending planar direction with the I-shaped core 4 interposed between them. More precisely, a first gap 5 is formed between the center leg 2a of the E-shaped core 2 and the I-shaped core 4 and a second gap 5 is formed between the center leg 3a of the E-shaped core 3 and the I-shaped core 4. Around the I-shaped core 4, a winding 11 (a first winding) having the number of turns of n1 and a winding 12 (a second winding) having the number of turns of n2 are wound. A current i1 passes through the winding 11 and a current i2 passes through the winding 12. As a result, as illustrated in Fig. 5, the inside of the integrated cores 3 and 4 forms four stable closed magnetic paths.

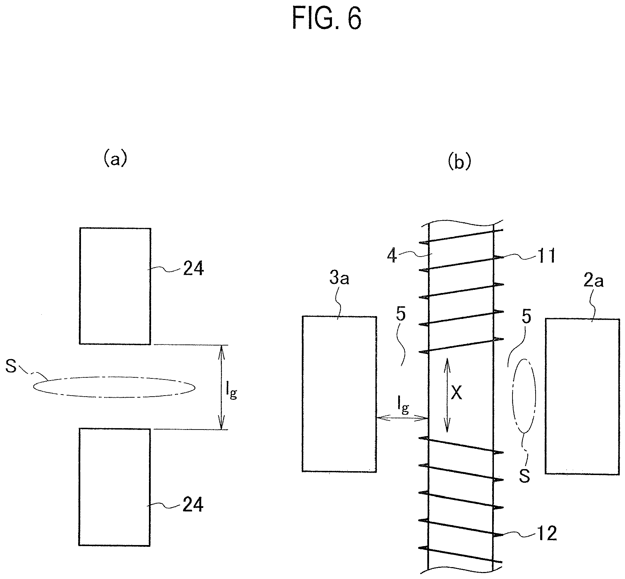

Figure 6 is a comparative view illustrating a gap length of the related art and that of Embodiment 1, in which Fig. 6(a) is of the related art and Fig. 6(b) of Embodiment 1. A theoretical magnetic resistance value Rmg of a gap is expressed with the following expression:

$$Rmg = lg / \mu o \times S,$$

where lg is a gap length, S is a sectional area, and $\mu$o is a magnetic permeability.

According to the coupling transformer 1 of the embodiment with such a configuration, the current i1 passes through the winding 11 and the current i2 passes through the winding 12. As illustrated in Fig. 5, the currents passing through the windings 11 and 12 generate magnetic flux along magnetic paths starting from the I-shaped core 4, passing through the gaps 5 and E-shaped cores 2 and 3, and returning to the I-shaped core 4. Closed magnetic paths are formed to greatly reduce leakage magnetic flux and shorten a gap length.

In this way, the embodiment is able to provide a DC-DC converter having the coupling transformer that is capable of substantially realizing a design based on theoretical values.

On the other hand, the coupling transformer 20 of the related art illustrated in Fig. 3 winds the windings 31 and 32 around the side legs 22 and 23, and therefore, magnetic flux leaks outside the side legs 22 and 23. This results in increasing leakage magnetic flux and expanding a difference between an actually measured value and a theoretical value.

(Embodiment 2)

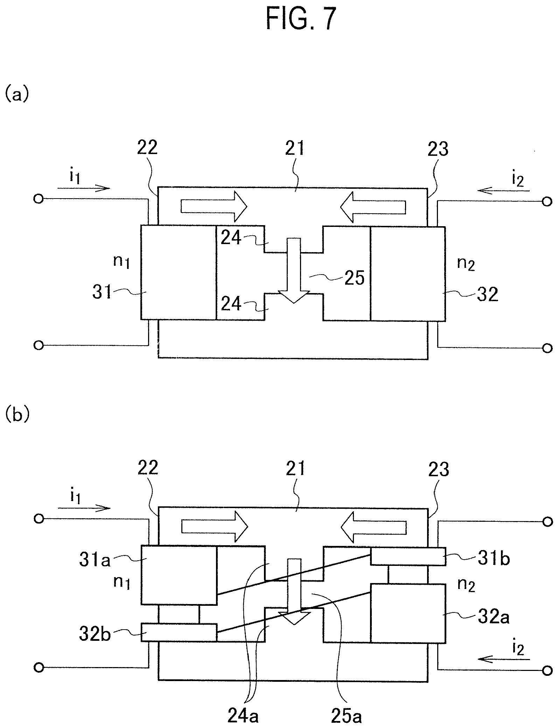

Figure 7 is a comparative view illustrating a winding method of the coupling transformer according to the related art and that according to Embodiment 2, in which Fig. 7(a) is a schematic view of the coupling transformer 20 according to the related art and Fig. 7(b) is of a coupling transformer according to Embodiment 2.

Except for the coupling transformer, the DC-DC converter of Embodiment 2 is the same as that illustrated in Fig. 4.

According to the coupling transformer 20 of the related art illustrated in Fig. 7(a), the winding 31 having the number of turns of n1 is wound around the side leg 22 and the winding 32 having the number of turns of n2 is wound around the side leg 23.

On the other hand, the coupling transformer of the embodiment illustrated in Fig. 7(b) connects, between a positive electrode of a DC power source Vi and the collector of a switch Tr1, a series circuit in which a winding 31a (a first winding) is connected in series with a winding 31b (a second winding). A winding 32a (a third winding) is connected in series with a winding 32b (a fourth winding) and this series circuit is connected between the positive electrode of the DC power source Vi and the collector of a switch Tr2.

The coupling transformer has two E-shaped cores that are integrated into a θ-shape with respective center legs 24a being faced to each other in an extending planar direction. A gap 25a is formed between the center leg 24a of one of the E-shaped cores and the center leg 24a of the other E-shaped core. Around side legs 22 of the E-shaped cores, the windings 31a and 32b are wound, and around side legs 23 of the E-shaped cores, the windings 31b and 32a are wound.

The sum of the numbers of turns of the windings 31a and 31b is n1 and the sum of the numbers of turns of the windings 32a and 32b is n2.

Namely, windings 31 and 32 are each divided into two and the windings 31a and 32b are wound around the side legs 22 and the windings 31b and 32a around the side legs 23. As results, magnetomotive force is distributed and a gap length is shortened, thereby the degree of coupling is improved.

In this way, the present invention is able to provide a DC-DC converter having the coupling transformer that is capable of reducing leakage magnetic flux and substantially realizing a design based on theoretical values.

**Claims**

1.   A DC-DC converter comprising:

   a coupling transformer (1) comprising a first winding (31a), a second winding (31b) electrically connected with the first winding (31a), a third winding (32a), and a fourth winding (32b) electrically connected with the third winding (32a);
   a first switch (Tr1) connected through the first and second windings (31a, 31b) to both ends of a DC power source (Vi);
   a second switch (Tr2) connected through the third and fourth windings (32a 32b) to the both ends of the DC power source (Vi);
   a first series circuit connected to both ends of the first switch (Tr1) and including a first diode (D1) and a smoothing capacitor (C0);
   a second series circuit connected to both ends of the second switch (Tr2) and including a second diode (D2) and the smoothing capacitor (C0); and
   a controller (100) configured to alternately turn on the first and second switches (Tr1, Tr2) and configured to make the first and second switches (Tr1, Tr2) simultaneously on for a predetermined overlapping period on every half cycle, **characterized in that:**

the coupling transformer (1) comprises two E-shaped cores that are combined together in a planar direction with their center legs (24a) being faced to each other;
a gap (25a) is formed between the center legs (24a) of the combined E-shaped cores;
the second winding (31b) is connected in series with the first winding (31a) and the fourth winding (32b) is connected in series with the third winding (32a);
the first and fourth windings (31a, 32b) are wound around first side legs (22) on one side of the combined E-shaped cores; and the second and third windings (31b, 32a) are wound around second side legs (23) on another side of the combined E-shaped cores.

**Patentansprüche**

1.   Gleichstrom-Gleichstrom-Wandler, umfassend:

   einen Kopplungstransformator (1), umfassend eine erste Wicklung (31a), eine zweite Wicklung (31b), die elektrisch mit der ersten Wicklung (31a) verbunden ist, eine dritte Wicklung (32a) und eine vierte Wicklung (32b), die elektrisch mit der dritten Wicklung (32a) verbunden ist;
   einen ersten Schalter (Tr1), der über die erste und die zweite Wicklung (31a, 31b) mit beiden Enden einer Gleichstromquelle (Vi) verbunden ist;
   einen zweiten Schalter (Tr2), der über die dritte und vierte Wicklung (32a, 32b) mit den beiden Enden der Gleichstromquelle (Vi) verbunden ist;
   eine erste Reihenschaltung, die mit beiden Enden des ersten Schalters (Tr1) verbunden ist und eine erste Diode (D1) und einen Glättungskondensator (CO) umfasst;
   eine zweite Reihenschaltung, die mit beiden Enden des zweiten Schalters (Tr2) verbunden ist und eine zweite Diode (D2) und den Glättungskondensator (CO) umfasst; und
   eine Steuereinheit (100), die dazu eingerichtet ist, den ersten und den zweiten Schalter (Tr1, Tr2) abwechselnd einzuschalten und dazu eingerichtet ist, den ersten und den zweiten Schalter (Tr1, Tr2) für eine vorbestimmte Überlappungsperiode bei jedem Halbzyklus gleichzeitig einzuschalten, **dadurch gekennzeichnet, dass**:

   der Kopplungstransformator (1) zwei E-förmige Kerne umfasst, die in einer ebenen Richtung miteinander kombiniert sind, wobei ihre Mittelschenkel (24a) einander zugewandt sind;

ein Spalt (25a) zwischen den Mittelschenkeln (24a) der kombinierten E-förmigen Kerne ausgebildet ist;

die zweite Wicklung (31b) in Reihe mit der ersten Wicklung (31a) geschaltet ist und die vierte Wicklung (32b) in Reihe mit der dritten Wicklung (32a) geschaltet ist;

die erste und die vierte Wicklung (31a, 32b) auf einer Seite der kombinierten E-förmigen Kerne um erste Seitenschenkel (22) gewickelt sind; und

die zweite und dritte Wicklung (31b, 32a) auf einer anderen Seite der kombinierten E-förmigen Kerne um zweite Seitenschenkel (23) gewickelt sind.

**Revendications**

1. Convertisseur continu - continu comprenant :

un transformateur de couplage (1) comprenant un premier enroulement (31a), un deuxième enroulement (31b) relié électriquement au premier enroulement (31a), un troisième enroulement (32a) et un quatrième enroulement (32b) relié électriquement au troisième enroulement (32a), un premier interrupteur (Tr1) relié par l'intermédiaire des premier et deuxième enroulements (31a, 31b) aux deux extrémités d'une source de puissance continue (Vi), un second interrupteur (Tr2) relié par l'intermédiaire des troisième et quatrième enroulements (32a, 32b) aux deux extrémités de la source de puissance continue (Vi), un premier circuit série relié aux deux extrémités du premier interrupteur (Tr1) et incluant une première diode (D1) et un condensateur de lissage (C0), un second circuit série relié aux deux extrémités du second interrupteur (Tr2) et incluant une seconde diode (D2) et le condensateur de lissage (C0), et un contrôleur (100) configuré pour rendre passants alternativement les premier et second interrupteurs (Tr1, Tr2) et configuré pour rendre simultanément passants les premier et second interrupteurs (Tr1, Tr2) pendant un intervalle de temps de chevauchement prédéterminé sur chaque demi cycle,
**caractérisé en ce que :**

le transformateur de couplage (1) comprend deux noyaux en forme de E qui sont combinés dans la direction du plan, leurs montants centraux (24a) se faisant face, un entrefer (25a) est formé entre les montants centraux (24a) des noyaux combinés en forme de E,
le deuxième enroulement (31b) est relié en série avec le premier enroulement (31a) et le quatrième enroulement (32b) est relié en série avec le troisième enroulement (32a), les premier et quatrième enroulements (31a, 32b) sont bobinés autour de premiers montants latéraux (22) situés sur un premier côté des noyaux combinés en forme de E, et
les deuxième et troisième enroulements (31b, 32a) sont bobinés autour de seconds montants latéraux (23) situés sur un autre côté des noyaux combinés en forme de E.

# FIG. 1

# FIG. 2

EP 2 827 484 B1

FIG. 3

# FIG. 4

# FIG. 5

# FIG. 6

(a)

(b)

# FIG. 7

(a)

(b)

**EP 2 827 484 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010004704 A
- WO 2009157330 A1
- US 6657529 B1
- US 20080224809 A1
- JP 2005223125 A
- US 3896407 A
- JP 2006147978 A